(19) Europäisches Patentamt / European Patent Office / Office européen des brevets

(11) **EP 2 166 248 B1**

(12) **EUROPEAN PATENT SPECIFICATION**

(45) Date of publication and mention
of the grant of the patent:
**11.05.2011 Bulletin 2011/19**

(51) Int Cl.:
*F16D 48/06* *(2006.01)*

(21) Application number: **09075432.6**

(22) Date of filing: **18.09.2009**

(54) **Apparatus and method for controlling the speed of rotation of a driven shaft.**

Vorrichtung und Verfahren zum Steuern der Drehgeschwindigkeit eines angetriebenen Schafts.

Appareil et procédé de contrôle de la vitesse de rotation d'un arbre de commande

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.09.2008 IT MI20081676**

(43) Date of publication of application:
**24.03.2010 Bulletin 2010/12**

(73) Proprietor: **Baruffaldi S.p.A.**
**20067 Tribiano (MI) (IT)**

(72) Inventors:
• **Boffelli, Piercarlo**
**c/o Baruffaldi S.p.A.**
**20067 Tribiano (MI) (IT)**

• **Depoli, Ermino**
**c/o Baruffaldi S.p.A.**
**20067 Tribiano (MI) (IT)**
• **Natale, Fabio**
**c/o Baruffaldi S.p. A.**
**20067 Tribiano (MI) (IT)**

(74) Representative: **Raimondi, Margherita**
**Dott. Ing. Prof. Alfredo Raimondi S.r.l.,**
**Piazzale Cadorna, 15**
**20123 Milano (IT)**

(56) References cited:
**EP-A- 2 042 767      DE-A1- 3 625 976**
**GB-A- 2 419 690      US-A1- 2008 185 254**

**Description**

The present invention relates to an apparatus and a method for controlling engagement/disengagement of an electromagnetic friction clutch coupling and the speed of rotation of a driven shaft connected to said a friction-clutch coupling.

It is known in the technical sector relating to the movement of rotating parts that there exists the need to control the rotation of a driven shaft connected to said rotating part and operated by a driving shaft from which the movement can be derived.

Practical examples of this need occur for example in vehicles where it is required to cause rotation of the fan for cooling the cooling fluid or supply power to a power steering device, the water pump and similar devices, which devices must be kept rotating at the correct speed, depending on the actual operating requirements represented by a corresponding control parameter which, in the examples cited above, may consist of the temperature of the cooling fluid, the speed of the vehicle or the temperature of the water.

Also known are devices which are arranged between the two shafts and comprise at least one electromagnetically operated friction clutch by means of which it is possible to connect only the two shafts in order to transmit a speed equal to the speed of the driving shaft, or keep the driven shaft idle relative to the driving shaft, following an electric signal, emitted by means for detecting the parameter to be controlled and able to cause engagement/disengagement of the clutch itself.

From US2008/185254 it is also known a PWD device to control the engagement/disengagement of a viscous clutch into which the control of the speed is obtained through the change of temperature and consistency of the viscous fluid.

In order to introduce a further speed of rotation which is slower than that of the driving shaft and useful for avoiding operation at full speed when not actually required, eddy-current couplings have been developed; these couplings, by connecting together the two shafts without contact and with relative slipping of the two coupling parts, cause a rotation of the driven shaft at a number of revolutions less than that of the driving shaft. Although performing their function, these devices nevertheless have certain drawbacks arising from the fact that, where coupling is performed by means of friction clutches, high torques, but only two speeds, i.e. maximum speed and zero speed, respectively, are obtained, whereas Foucault couplings produce predefined speeds, which may be reduced depending on the dimensions of the component parts of the coupling itself, but in any case low torques owing to the lack of contact between the two parts of the transmission.

The technical problem which is posed, therefore, is that of providing an apparatus for controlling the speed of rotation of a driven shaft operated by a driving shaft via an electromagnetically controlled friction clutch which is able to produce controlled variation of the revolutions of the driven shaft, while maintaining high torque transmission characteristics.

In connection with this problem it is also required that this apparatus may also be of the fail-safe type, have small dimensions, be easy and inexpensive to produce and assemble and be able to be installed easily also on already existing devices without the need for excessive special adaptation.

These results are achieved according to the present invention by an apparatus for controlling engagement/disengagement of a coupling arranged between a driving shaft and a driven shaft, according to the characteristic features of Claim 1 and by a method according to the characteristic features of Claim 12.

Further details may be obtained from the following description of a non-limiting example of embodiment of the subject of the present invention provided with reference to the accompanying drawings in which:

Figure 1    shows a schematic view of a first embodiment of the control apparatus according to the present invention applied to an electromagnetic clutch;

Figure 2    shows diagrams which illustrate varying trends of the parameters controlled by the apparatus according to the invention;

Figure 3    shows a schematic view of a second embodiment of the control apparatus according to the present invention applied to a load; and

Figure 4    shows a flow diagram of the operating sequence of the control apparatus according to Fig. 1.

Figure 5    shows a schematic view of a further embodiment of the coupling according to the present invention incorporating a fail-safe device and closed for transmission of the movement;

Figure 6    shows the coupling according to Fig. 5 open; and

Figure 7    shows a view of a preferred embodiment of the armature of the coupling according to the present invention.

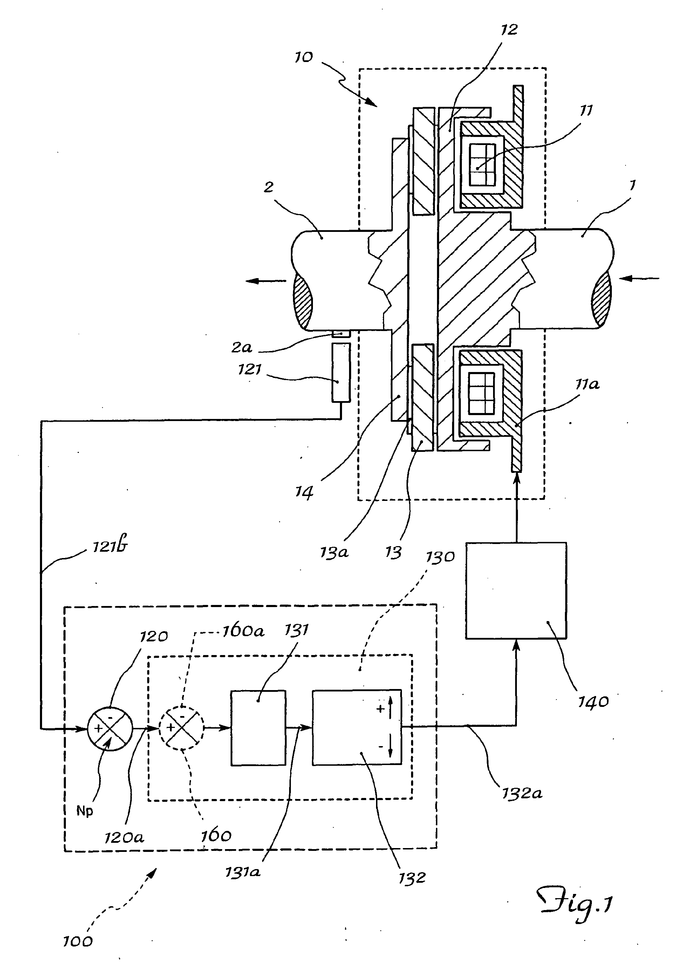

As illustrated in Fig. 1, the control apparatus 100 according to the present invention is applied to an electromagnetic clutch 10 arranged between a driving shaft 1 and a driven shaft 2 and comprising a fixed electromagnet 11, a rotor 12 rigidly connected to the driving shaft, an armature 13 which is rotationally connected to the driven shaft 2 via a resilient membrane 13a which allows displacement of the armature, but not relative rotation thereof.

The armature 13 is axially brought into contact with the rotor 12 following excitation of the electromagnet 11, with consequent engagement of the transmission, or is recalled by the resilient means 13a, when the electromagnet is de-energized, with consequent disengagement of the transmission.

A detection element 2a is arranged on the driven shaft 2, said element being associated with a sensor 121 able to emit a predefined signal 121b depending on the number of revolutions detected at the driven shaft 2, said signal being used by the apparatus as will emerge more clearly below.

As shown in Fig. 1, the control apparatus 100 comprises:

- a comparator 120 which, receiving at its input the value Np, corresponding to the programmed number of revolutions for the driven shaft 2, and the existing value 121b of the revolutions detected at the driven shaft 2, determines the difference between them, emitting a corresponding signal 120a which is input to

- a processing unit 130 in turn comprising:

   a CPU 131 able to receive at its input said difference signal 120a and emit an associated signal 131a depending on whether the difference signal 120a is positive or negative;
   a circuit 132 which, upon receiving this signal 130a at its input, generates a control signal 132a (or duty cycle signal) for activating/deactivating the clutch 10, depending on the value of the signal 130a;
   a device 140 for energizing the clutch 10, which, upon receiving the signal 132a output by the duty cycle control, determines the engaging/disengaging frequency of the clutch.

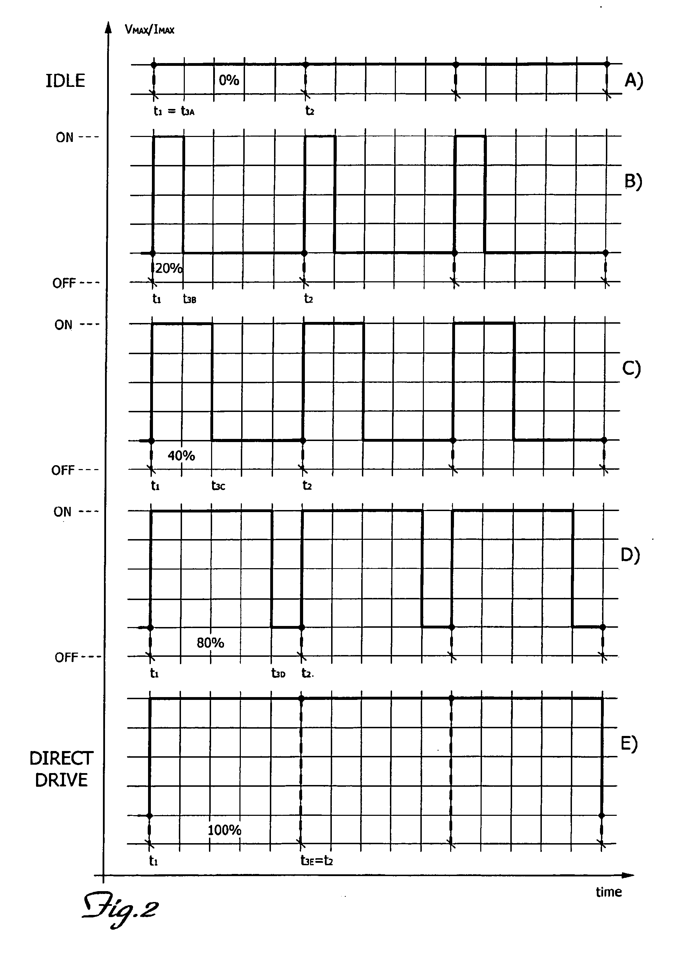

As shown in the graph of Fig. 2 in which the x axis shows the time t and the y axis shows the maximum voltage/current value $V/I_{MAX}$ supplied to the clutch 10, the signal 132a controlling engagement/disengagement has a constant total duration (t2-t1) but may be forced with different intervals for the activation time (t3-t1) and deactivation time (t2-t3).

In greater detail and assuming conventionally for the sake of simplicity of the description percentage values for the duration of the activation signal $V/I_{MAX}$, the following is obtained:

   A) (t3A-t1)=0 or 0% activation of the clutch;
   B) (t3B-t1) =20% or the clutch is activated for 20% of the cycle time;
   C) (t3C-t1)=40% or the clutch is activated for 40% of the cycle time;
   D) (t3D-t1)=80% or the clutch is activated for 80% of the cycle time;
   E) (t3E-t1)=100% or the clutch is constantly activated for the whole cycle time.

It can therefore be seen that, in the two extreme cases A) and E) where (t3A -t1) = 0 and (t2 - t3E) = 0, the clutch 10 is respectively always disengaged, with the driven shaft 2 idle, or always engaged, with the driven shaft 2 directly driven; in the intermediate cases B-D the partial energization of the clutch instead produces an engagement time defined by the average of the energization time (t3-t1) and the de-energization time (t2-t3), with consequent and corresponding regulation of the engagement which results in a variation in the number of revolutions at the driven shaft 2.

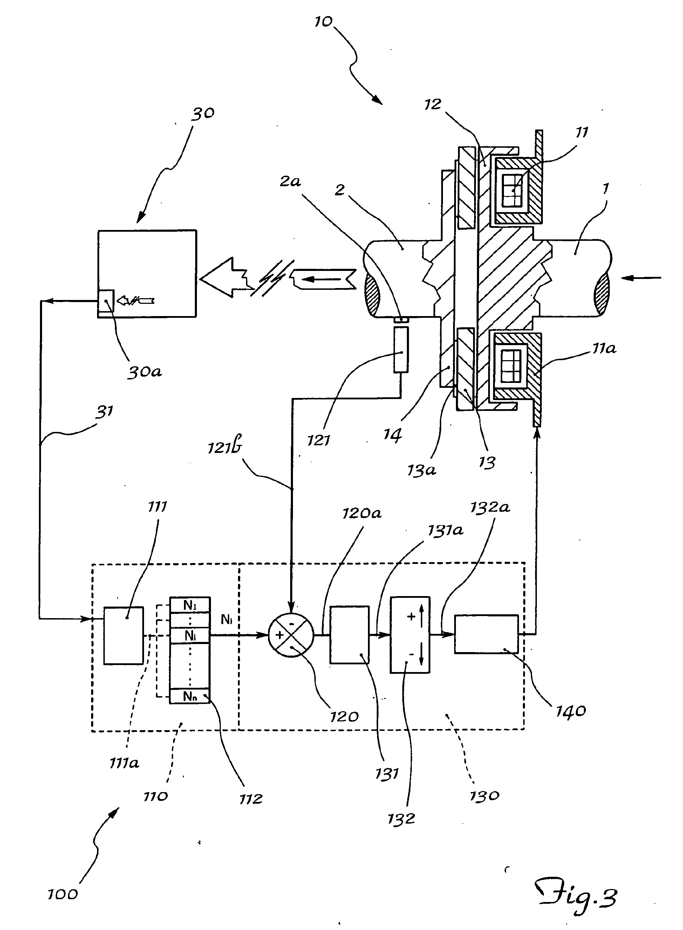

As shown in Fig. 3 it is also envisaged that the driven shaft 2 is connected to a load 30 which is to be rotationally operated and a parameter of which is to be controlled, said parameter being represented by a corresponding electric signal 31 emitted by a detector 30a associated for this purpose with the load 30.

An example of such a load may be a fan for cooling the coolant of a vehicle for which it is required to control the temperature T of the coolant contained in the radiator.

Said signal 31 is input to:

- a circuit 111 able to receive said reference signal 31 and activate a given output 111a depending on the value of the input signal;

- the signal 111a is input to a memory 112 with n addresses, each of which stores a predetermined number Ni representing the revolutions of the driven shaft corresponding to the detected value of the reference parameter 31;

- the activation of the address location Ni corresponding to the signal 111a causes said signal Ni to be input to the comparator 120 which reactivates the control sequence already described in relation to Fig. 1.

It is therefore clear how with the control apparatus according to the invention it is possible to obtain a substantially continuous variation in the number of revolutions of the driven shaft, achieving very precise control of the reference parameter depending on the rotation of the rotating load 30 connected to the driven shaft 2.

In addition to this, control of the engagement/disengagement frequency without variation of the total cycle time (t2-t1) allows the clutch to be kept always engaged thereby avoiding the noisiness of engagement and disengagement performed in rapid sequence and excessive fluctuations in the number of revolutions of the driven shaft.

According to preferred embodiments it is envisaged that the apparatus also comprises:

- a delay device able to ensure stable rotation of the driven shaft after a previous correction and before a subsequent reading operation;

- a further comparator 160 arranged between the first comparator 120 and the CPU 131 and able to compare the difference signal 120a with a threshold value 160a so as to introduce a certain tolerance in order to avoid excessively rapid or sudden adjustments;

- in addition to this, the three main components of the processing unit may be centralized in the CPU.

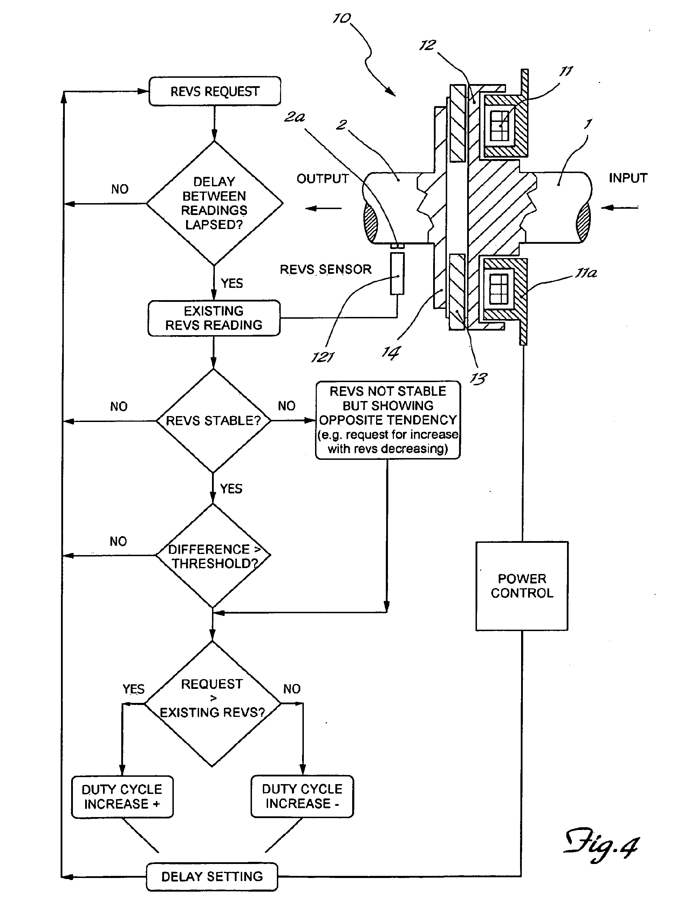

With reference to the flow diagram shown in Fig. 4, it is envisaged moreover that the control apparatus 100 according to the present invention is able to implement a method for controlling the number of revolutions of a driven shaft 2 via an electromagnetically controlled friction clutch 10 arranged between a driving shaft 1 and said driven shaft 2, which method comprises the following steps:

a) defining a cycle time interval (t2-t1) for activation/deactivation of the clutch 10;
b) detecting the number of existing revolutions (121b) at the driven shaft 2;
c) comparing the number of revolutions detected and the programmed number of revolutions (Np);
d) generating a signal representing the difference between the programmed number of revolutions and the detected number of revolutions;
e) activating the clutch 10 for a period of time (t3-t1) such that

$$0 \leq (t3-t1) \leq (t2-t1)$$

depending on the result of the difference with respect to the programmed number of revolutions (Np)
f) repeating the cycle from step b) for detecting the number of revolutions.

It is envisaged moreover that, in the case where the driven shaft controls a load 30 of the rotating type having a reference parameter T which is to be controlled, the method comprises the following further steps:

b1) detecting the existing value of the parameter T to be controlled;
b2) converting said existing value T into a corresponding signal 31;
b3) converting said signal 31 into a corresponding existing number of revolutions Ni;
b4) comparing said existing number of revolutions Ni and the number of revolutions 121b detected at the driven shaft 2 with generation of a difference signal 120a and activation of the clutch 10 according to the preceding steps d) and e). According to preferred embodiments of the method, the following auxiliary steps are also envisaged: d1) introducing a delay for activation of the clutch according to step e);
d2) evaluating the delay between two successive readings of the number of revolutions at the driven shaft 2 and updating the reading in the event of a delay between two successive readings being greater than a predefined (lapsed) time;

e1) introducing a delay between two successive readings of the number of revolutions so as to allow stabilization of rotation following previous correction of the duty cycle;
e2) evaluating the variations in the revolutions detected at the driven shaft 2 with corrective action in the event of revolutions which are not stable, but show an opposite tendency (request for reduction in revolutions with increasing revolutions), an immediate action eliminating any delay between two successive readings.

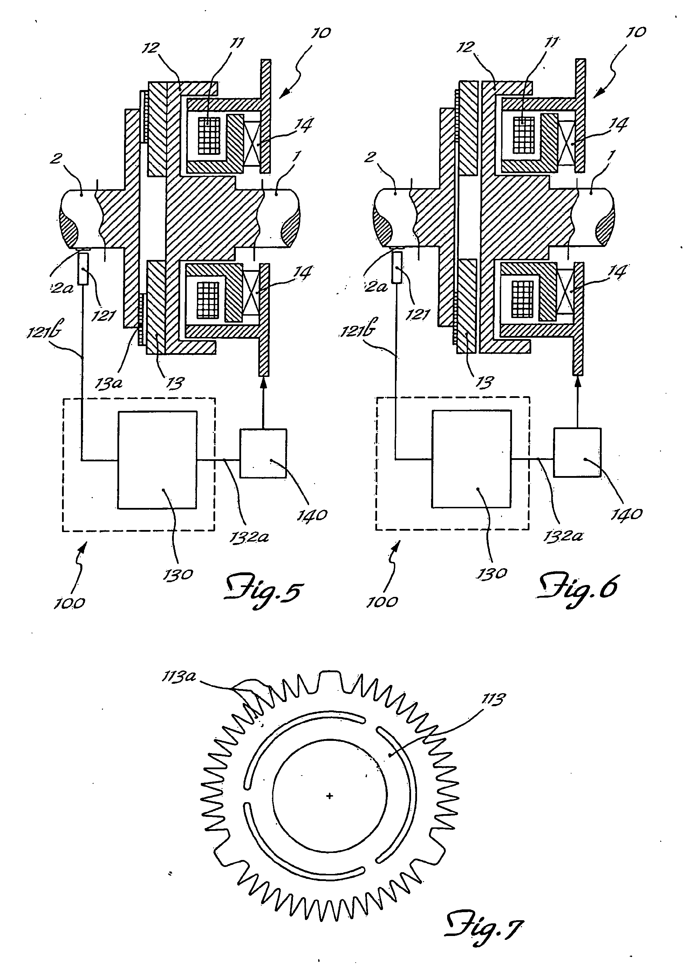

As shown in Figs. 5 and 6, the coupling according to the present invention may also comprise a permanent magnet 14 arranged on the opposite side to the electromagnet 11 relative to the armature 13.
In this case the armature 13 is normally brought into contact with the rotor 12 by the recall action exerted by the magnetic field of the permanent magnet 14 (Fig. 5), while, following energization of the magnet 11, the effect of the magnet 14 is neutralized with consequent release of the armature and disengagement of the transmission (Fig. 6).
In this case during fail-safe operation, the following activation/deactivation sequences are envisaged:

A) (t3A-t1)=0 or the clutch is activated 100% of the time;
B) (t3B-t1)=20%: the clutch is activated for 80% of the cycle time;
C) (t3C-t1)=40%: the clutch is activated for 60% of the cycle time;
D) (t3D-t1)=80%: the clutch is activated for 20% of the cycle time;
E) (t3E-t1)=100%: the clutch is constantly deactivated for the entire cycle time.

It can therefore be seen that, in the two extreme cases A) and E) where (t3A-t1) = 0 and (t2-t3E) = 0, the clutch 10 is respectively always engaged, with the driven shaft 2 directly driven, or always disengaged, with the driven shaft 2 idle; in the intermediate cases B-D the partial energization of the clutch produces instead an engagement time defined by the average of the energization time (t3-t1) and the de-energization time (t2-t3), with consequent and corresponding regulation of the engagement which results in a variation in the number of revolutions at the driven shaft 2.
As shown in Figure 7, it is envisaged that the armature 113 of the coupling is designed with a circumferential surface serrated in the form of fins 113a for achieving a larger heat-dissipation surface area; it is moreover envisaged that the rotor 12 may also be designed in a similar manner. Although described in relation to a number of embodiments and a number of preferred examples of embodiment of the invention it is understood that the scope of protection of the present patent is defined solely by the following claims.

## Claims

1. Apparatus for controlling engagement/disengagement of an electromagnetic friction clutch arranged between a driving shaft (1) and a driven shaft (2), comprising means (121) for detecting the number of revolutions of the driven shaft, means (140) for energizing the coupling (10), which can be activated/ deactivated for a predefined constant total time interval (t2-t1), control means (130) able to determine an activation time interval (t3-t1) such that the activation time (t3-t1) is less then the constant total time interval (t2-t1) **characterized in that** it comprises means for controlling the engagement/disengagement frequency without variation of the constant total time interval (t2-t1) and **in that** said frequency is such that the clutch is kept always engaged.

2. Apparatus according to Claim 1, **characterized in that** said control means (130) comprise:

   - a comparator (120) able to receive at its input a programmed value Np for the driven shaft (2) and the existing value (121b) of the revolutions detected at the driven shaft (2) and determine the difference between them, emitting a corresponding signal (120a);
   - a processing unit (130) in turn comprising:

     · a CPU (130) able to receive at its input said difference signal (120a) and emit an associated signal (131a) depending on whether the difference signal (120a) is positive or negative;
     · a circuit (132) which, upon receiving this signal (130a) at its input, generates a control signal (132a) for activating/deactivating the clutch (20), depending on the value of the signal (130a).

3. Apparatus according to Claim 2, **characterized in that** the three components are centralized in the CPU.

4. Apparatus according to Claim 2, **characterized in that** it comprises a further comparator (160) arranged between the first comparator (120) and the CPU (131) and able to compare the said difference signal (120a) with a threshold value (161).

5. Apparatus according to Claim 1, **characterized in that** it comprises a device for generating a delay between a previously corrected reading and a subsequently detected reading of the revolutions of the driven shaft (2).

6. Apparatus according to Claim 1, **characterized in that** it is connected to a rotating load (30) able to produce the variation of a reference parameter (T).

7. Apparatus according to Claim 6, **characterized in that** it comprises a detector (30a) associated with the load (30) and able to measure the reference parameter (T) and emit a corresponding electrical reference signal (31).

8. Apparatus according to Claim 7, **characterized in that** it comprises:

   - a circuit (11) able to receive said reference signal (31) at its input and activate a given output (111a) depending on the value of the input signal;
   - a memory (112) with n addresses, each of which has stored inside it a predetermined number Ni representing the revolutions of the driven shaft (2) corresponding to the detected value of the reference parameter (31) and sent to the said comparator (120).

9. Apparatus according to Claim 1, **characterized in that** it comprises means (14) for constant operation of the coupling (10) in fail-safe mode.

10. Apparatus according to Claim 8, **characterized in that** said constant-operation means consist of a permanent magnet (14) arranged on the opposite side to the electromagnet (11) relative to the armature (13).

11. Apparatus according to Claim 1, **characterized in that** the armature (113) and/or the rotor (12) have a circumferential surface serrated in the form of fins (113a).

12. Method for controlling engagement/disengagement of an electromagnetic friction clutch (10) arranged between a driving shaft (1) and a driven shaft (2), which comprises the following steps:

   a) defining a cycle time interval (t2-t1) for activation/deactivation of the coupling (10);
   b) detecting the number of existing revolutions (121b) at the driven shaft (2);
   c) comparing the number of revolutions detected and the programmed number of revolutions (Np);
   d) generating a signal representing the difference between the programmed number of revolutions and the detected number of revolutions;
   e) activating the coupling (10) for a period of time (t3-t1) such that the activation time (t3-t1) is less then the constant total time interval (t2-t1) depending on the result of the difference from the programmed number of revolutions (Np);
   e2) controlling the engagement/disengagement frequency without variation of the constant total time interval (t2-t1) to a value such that the clutch is kept always engaged;

f) repeating the cycle from step b) for detecting the number of revolutions.

13. Method according to Claim 12, **characterized in that** it comprises the further step d1) consisting in introducing a delay for activation of the clutch according to step e).

14. Method according to Claim 12, **characterized in that** it comprises the further step d2) consisting in evaluating the delay between two successive readings of the number of revolutions at the driven shaft (2) and updating the reading in the event of a delay between two successive readings being greater than a predefined (lapsed) time.

15. Method according to Claim 12, **characterized in that** it comprises the further step e1) consisting in introducing a delay between two successive readings of the number of revolutions so as to allow stabilization of rotation following previous correction of the duty cycle.

16. Method according to Claim 12 for controlling a reference parameter (T) of a rotating load (30) connected to the driven shaft (2), **characterized in that** it comprises the following steps:

   b1) detecting the existing value of the parameter (T) to be controlled;
   b2) converting said existing value (T) into a corresponding signal (31);
   b3) converting said signal (31) into a corresponding existing number of revolutions (Ni);
   b4) comparing said existing number of revolutions (Ni) and the number of revolutions (121b) detected at the driven shaft (2) with generation of a difference signal (120a) and activation of the clutch (10) according to the preceding steps d) and e).

17. Method according to Claim 12, **characterized in that** the electromagnetic clutch comprises a permanent activation magnet (14).

18. Method according to Claim 17, **characterized in that** the activation/deactivation steps are inverted.

**Patentansprüche**

1. Vorrichtung zum Steuern der Einkupplung/Auskupplung einer elektromagnetischen Friktionskupplung, die zwischen einer treibenden Welle (1) und einer angetriebenen Welle (2) angeordnet ist, umfassend Mittel (121) zum Detektieren der Umdrehungszahl der angetriebenen Welle, Mittel (140) zum Erregen der Kupplung (10), die während eines vordefinierten konstanten Gesamtzeitintervalls (t2 - t1) aktiviert/deaktiviert werden kann und Steuermittel (130), die dazu geeignet sind, ein Aktivierungszeitintervall (t3 - t1) zu bestimmen, so dass die Aktivierungszeit (t3 - t1) kleiner als das konstante Gesamtzeitintervall (t2 - t1) ist, **dadurch gekennzeichnet, dass** sie Mittel zum Steuern der Einkupplungs/Auskupplungsfrequenz ohne Veränderung des konstanten Gesamtzeitintervalls (t2 - t1) umfasst, und dass die Frequenz so ist, dass die Kupplung immer im Eingriff gehalten wird.

2. Vorrichtung nach Anspruch 1, **dadurch gekennzeichnet, dass** die Steuermittel (130) umfassen:

   - einen Komparator (120), der dazu geeignet ist, an seinem Eingang einen programmierten Wert Np für die angetriebene Welle (2) und den vorhandenen Wert (121 b) der an der angetriebenen Welle (2) detektierten Umdrehungen zu empfangen und die Differenz zwischen diesen zu bestimmen und ein entsprechendes Signal (120a) abzugeben;
   - einen Prozessor (130) der Reihe nach umfassend:

      . einen Zentralrechner (131), der dazu geeignet ist, an seinem Eingang das Differenzsignal (120a) zu empfangen und ein zugeordnetes Signal (131 a) abzugeben, das abhängig davon ist, ob das Differenzsignal (120a) positiv oder negativ ist;
      . einen Schaltkreis (132) der, nach dem Empfangen dieses Signals (131 a) an seinem Eingang, abhängig vom Wert des Signals (131 a) ein Steuersignal (132a) für das Aktivieren/Deaktivieren der Kupplung (20) generiert.

3. Vorrichtung nach Anspruch 2, **dadurch gekennzeichnet, dass** die drei Komponenten in dem Zentralrechner zentralisiert sind.

4. Vorrichtung nach Anspruch 2, **dadurch gekennzeichnet, dass** die Vorrichtung einen weiteren Komparator (160) umfasst, der zwischen dem ersten Komparator (120) und dem Zentralrechner (131) angeordnet ist und dazu geeignet ist, das Differenzsignal (120a) mit einem Schwellenwert (161) zu vergleichen.

5. Vorrichtung nach Anspruch 1, **dadurch gekennzeichnet, dass** die Vorrichtung eine Vorrichtung zum Erzeugen einer Wartezeit zwischen einer vorher korrigierten Ablesung und einer nachher ermittelten Ablesung der Umdrehungen der angetriebenen Welle (2) umfasst.

6.  Vorrichtung nach Anspruch 1, **dadurch gekennzeichnet, dass** die Vorrichtung mit einer rotierenden Last (30) verbunden ist, die dazu geeignet ist, die Veränderung eines Referenzparameters (T) zu erzeugen.

7.  Vorrichtung nach Anspruch 6, **dadurch gekennzeichnet, dass** die Vorrichtung einen Detektor (30a) umfasst, der der Last (30) zugeordnet ist und dazu geeignet ist, den Referenzparameter (T) zu messen und ein entsprechendes elektrisches Referenzsignal (31) abzugeben.

8.  Vorrichtung nach Anspruch 7, **dadurch gekennzeichnet, dass** die Vorrichtung umfasst:

    - einen Schaltkreis (111), der dazu geeignet ist, das Referenzsignal (31) an seinem Eingang zu empfangen und einen gegebenen Ausgang (111a) abhängig vom Wert des Eingangssignals zu aktivieren;
    - einen Speicher (112) mit n Adressen, wovon jede eine vorbestimmte Zahl Ni in ihr gespeichert hat, die die Umdrehungen der angetriebenen Welle (2) repräsentiert und die dem detektierten Wert des Referenzparameters (31) entspricht und an den Komparator (120) gesendet wird.

9.  Vorrichtung nach Anspruch 1, **dadurch gekennzeichnet, dass** die Vorrichtung Mittel (14) für einen konstanten Betrieb der Kupplung (10) in einem ausfallsicheren Modus umfasst.

10. Vorrichtung nach Anspruch 8, **dadurch gekennzeichnet, dass** die Mittel für einen konstanten Betrieb aus einem Permanentmagneten (14) bestehen, der relativ zum Läufer (13) auf der gegenüberliegenden Seite des Elektromagneten (11) angeordnet ist.

11. Vorrichtung nach Anspruch 1, **dadurch gekennzeichnet, dass** der Läufer (13) und/oder der Rotor (12) eine Umfangsfläche haben, die in Form von Finnen (113a) gezahnt ist.

12. Verfahren zum Steuern der Einkupplung/Auskupplung einer elektromagnetischen Friktionskupplung (10), die zwischen einer treibenden Welle (1) und einer angetriebenen Welle (2) anordnet ist, das die folgenden Schritte umfasst:

    a) definieren eines Zykluszeitintervalls (t2 - t1) zur Aktivierung/Deaktivierung der Kupplung (10);
    b) ermitteln der Anzahl der vorhandenen Umdrehungen (121 b) an der angetriebenen Welle (2);
    c) vergleichen der ermittelten Umdrehungszahl und der programmierten Umdrehungszahl (Np);
    d) erzeugen eines Signals, das den Unterschied zwischen der programmierten Umdrehungszahl und der ermittelten Umdrehungszahl repräsentiert;
    e) aktivieren der Kupplung (10) während einer Zeitdauer (t3 - t1) so, dass abhängig vom Resultat der Differenz von der programmierten Umdrehungszahl (Np) die Aktivierungszeit (t3-t1) kleiner als das konstante Gesamtzeitintervall (t2-t1) ist; e2) steuern der Einkupplungs/Auskupplungsfrequenz ohne Veränderung des konstanten Gesamtzeitintervalls (t2 - t1) auf einen Wert so, dass die Kupplung immer im Eingriff gehalten wird;
    f) wiederholen des Zyklus von Schritt b) zum Ermitteln der Umdrehungszahl.

13. Verfahren nach Anspruch 12, **dadurch gekennzeichnet, dass** das Verfahren den weiteren Schritt d1) umfasst, der aus dem Einführen einer Verzögerung für die Aktivierung der Kupplung gemäss Schritt e) besteht.

14. Verfahren nach Anspruch 12, **dadurch gekennzeichnet, dass** das Verfahren den weiteren Schritt d2) umfasst, der aus dem Auswerten der Verzögerung zwischen zwei aufeinanderfolgenden Ablesungen der Umdrehungszahl der angetriebenen Welle (2) und der Aktualisierung der Ablesung im Fall einer Verzögerung zwischen zwei aufeinanderfolgenden Ablesungen besteht, die grösser als eine vordefinierte (Intervall) Zeit ist.

15. Verfahren nach Anspruch 12, **dadurch gekennzeichnet, dass** das Verfahren den weiteren Schritt e1) umfasst, der aus dem Einführen einer Verzögerung zwischen zwei aufeinanderfolgenden Ablesungen der Umdrehungszahl besteht, um eine Stabilisierung der auf eine vorhergehende Korrektur des Arbeitszyklus folgenden Rotation zu erlauben.

16. Verfahren nach Anspruch 12 zum Steuern eines Referenzparameters (T) einer mit der angetriebenen Welle (2) verbundenen rotierenden Last (30), **dadurch gekennzeichnet, dass** das Verfahren die folgenden Schritte umfasst:

    b1) ermitteln des vorhandenen zu steuernden Werts des Parameters (T);
    b2) umwandeln des vorhandenen Werts (T) in ein entsprechendes Signal (31);
    b3) umwandeln des Signals (31) in eine entsprechende vorhandene Umdrehungszahl (Ni);
    b4) vergleichen der vorhandenen Umdrehungszahl (Ni) mit der an der angetriebenen Welle (2) ermittelten Umdrehungszahl (121 b) unter Erzeugung eines Differenzsignals (120a) und einer Aktivierung der Kupplung (10) gemäss den vorhergehenden Schritten d) und e).

17. Verfahren nach Anspruch 12, **dadurch gekennzeichnet, dass** die elektromagnetische Kupplung einen permanenten Aktivierungsmagnet (14) umfasst.

18. Verfahren nach Anspruch 17, **dadurch gekennzeichnet, dass** die Aktivierungs/Deaktivierungsschritte invertiert sind.

## Revendications

1. Appareil permettant de contrôler l'engagement et le désengagement d'un embrayage à friction électromagnétique disposé entre un arbre de commande (1) et un arbre mené (2), comportant des moyens (121) pour détecter le nombre de tours de l'arbre mené, des moyens (140) pour exciter l'accouplement (10), lequel peut être activé/désactivé pendant un laps de temps total constant prédéfini (t2 - t1), des moyens de contrôle (130) capables de déterminer un laps de temps d'activation (t3 - t1) de telle sorte que le temps d'activation (t3- t1) soit plus petit que le laps de temps total constant (t2 - t1), **caractérisé en ce qu'**il comprend des moyens permettant de contrôler la fréquence des engagements / désengagements sans variation du laps de temps total constant (t2 -t1), et **caractérisé en ce que** ladite fréquence est telle que l'embrayage est maintenu toujours engagé.

2. Appareil selon la revendication 1, **caractérisé en ce que** lesdits moyens de contrôle (130) comportent :

   - un comparateur (120) capable de recevoir au niveau de son entrée une valeur programmée Np destinée à l'arbre mené (2) et la quantité effective (121 b) de tours détectée au niveau de l'arbre mené (2) et de déterminer la différence entre elles, en émettant un signal correspondant (120a) ;
   - une unité de traitement (130) comportant, à son tour :
   - une unité centrale de traitement (UCT) (130) capable de recevoir au niveau de son entrée ledit signal de différence (120a) et d'émettre un signal associé (131a) selon que le signal de différence (120a) est positif ou négatif ;

   un circuit (132) qui, à la réception de ce signal (131 a) au niveau de son entrée, génère un signal de commande (132a) pour activer / désactiver l'embrayage (20), en fonction de la valeur du signal (131 a).

3. Appareil selon la revendication 2, **caractérisé en ce que** les trois composants sont centralisés dans l'UCT.

4. Appareil selon la revendication 2, **caractérisé en ce qu'**il comporte un autre comparateur (160) disposé entre le premier comparateur (120) et l'UCT (131) et capable de comparer ledit signal de différence (120a) avec une valeur de seuil (161).

5. Appareil selon la revendication 1, **caractérisé en ce qu'**il comporte un dispositif pour générer un retard entre une lecture corrigée antérieurement et une lecture détectée ultérieurement des tours de l'arbre mené (2).

6. Appareil selon la révolution 1, **caractérisé en ce qu'**il est connecté à une charge en rotation (30) capable de produire la variation d'un paramètre de référence (T).

7. Appareil selon la revendication 6, **caractérisé en ce qu'**il comporte un détecteur (30a) associé à la charge (30) et capable de mesurer le paramètre de référence (T) et d'émettre un signal électrique de référence correspondant (31).

8. Appareil selon la revendication 7, **caractérisé en ce qu'**il comprend :

   - un circuit (11) capable de recevoir ledit signal de référence (31) au niveau de son entrée et d'activer une sortie donnée (111 a) en fonction de la valeur du signal d'entrée ;
   - une mémoire (112) dotée de n adresses, chacune d'entre elles y ayant stocké un nombre prédéterminé Ni représentant le nombre de tours de l'arbre mené (2) correspondant à la valeur détectée du paramètre de référence (31) et transmise au dit comparateur (120).

9. Appareil selon la revendication 1, **caractérisé en ce qu'**il comporte des moyens (14) permettant un fonctionnement constant de l'accouplement (10) en mode à sécurité intégrée.

10. Appareil selon la revendication 8, **caractérisé en ce que** lesdits moyens pour un fonctionnement constant sont constitués d'un aimant permanent (14) disposé sur le côté opposé à l'électro-aimant (11) par rapport à l'armature (13).

11. Appareil selon la revendication 1, **caractérisé en ce que** l'armature (13) et/ou le rotor (12) présentent une surface circonférentielle dentelée sous la forme de nervures (113a).

**12.** Procédé permettant de contrôler l'engagement et le désengagement d'un embrayage à friction électromagnétique (10) disposé entre un arbre de commande (1) et un arbre mené (2), lequel procédé comprend les étapes suivantes :

a) définir un laps de temps de cycle (t2 - t1) permettant l'activation/la désactivation de l'accouplement (10) ;

b) détecter le nombre de tours effectifs (121 b) au niveau de l'arbre mené (2) ;

c) comparer le nombre de tours détecté et le nombre programmé de tours (Np)

d) générer un signal représentant la différence entre le nombre programmé de tours et le nombre détecté de tours ;

e) activer l'accouplement (10) pendant une durée (t3 - t1) de façon que le temps d'activation (t3 - t1) soit plus petit que le laps de temps total constant (t2 - t1) en fonction du résultat de la différence à partir du nombre programmé de tours (Np) ;

e2) commander la fréquence des engagements / désengagements sans variation du laps de temps total constant (t2 - t1) à une valeur telle que l'embrayage soit maintenu toujours engagé ;

f) répéter le cycle à partir de l'étape b) pour détecter le nombre de tours.

**13.** Procédé selon la revendication 12, **caractérisé en ce qu'**il comporte l'étape supplémentaire d1) consistant à introduire un retard pour l'activation de l'embrayage selon l'étape e).

**14.** Procédé selon la revendication 12, **caractérisé en ce qu'**il comprend l'étape supplémentaire d2) consistant à évaluer le retard entre deux lectures successives du nombre de tours au niveau de l'arbre mené (2) et à actualiser la lecture dans le cas d'un retard entre deux lectures successives supérieur à un temps prédéfini (écoulé).

**15.** Procédé selon la revendication 12, **caractérisé en ce qu'**il comprend l'étape supplémentaire e1) consistant à introduire un retard entre deux lectures successives du nombre de tours de façon à permettre une stabilisation de la rotation après une correction précédente du cycle de fonctionnement.

**16.** Procédé selon la revendication 12 permettant de contrôler un paramètre de référence(T) d'une charge en rotation (30) connectée à l'arbre mené (2), **caractérisé en ce qu'**il comprend les étapes suivantes :

b1) détecter la valeur existante du paramètre (T) à contrôler ;

b2) convertir ladite valeur existante (T) en un signal correspondant (31) ;

b3) convertir ledit signal (31) en un nombre effectif de tours correspondant (Ni)

b4) comparer ledit nombre effectif de tours (Ni) et le nombre de tours (121b) détecté au niveau de l'arbre mené (2) avec la production d'un signal de différence (120a) et l'activation de l'embrayage (10) selon les étapes précédentes d) et e).

**17.** Procédé selon la revendication 12, **caractérisé en ce que** l'embrayage électromagnétique comporte un aimant d'activation permanent (14).

**18.** Procédé selon la revendication 17, **caractérisé en ce que** les étapes d'activation / désactivation sont inversées.

*Fig.1*

Fig.2

Fig.3

REVS REQUEST

DELAY BETWEEN READINGS LAPSED?

NO

YES

EXISTING REVS READING

REVS STABLE?

NO

NO

REVS NOT STABLE BUT SHOWING OPPOSITE TENDENCY (e.g. request for increase with revs decreasing)

YES

DIFFERENCE > THRESHOLD?

NO

REQUEST > EXISTING REVS?

YES

NO

DUTY CYCLE INCREASE +

DUTY CYCLE INCREASE -

DELAY SETTING

10

12

11

2a

2

OUTPUT

1

INPUT

REVS SENSOR

121

14

13

11a

POWER CONTROL

Fig.4

13

**Fig.5**

**Fig.6**

**Fig.7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008185254 A